# EUROPEAN PATENT SPECIFICATION

(11) **EP 0 758 616 B1**
(45) Date of publication and mention of the grant of the patent: **07.03.2001**
(21) Application number: 96305822.7
(22) Date of filing: 08.08.1996
(51) Int. Cl.: B65D 63/08, F16L 3/233

(54) **Tie**
Bindeelement
Elément d'attache

(30) Priority: 16.08.1995 GB 9516779
(43) Date of publication of application: 19.02.1997
(73) Proprietor: BOWTHORPE PLC, Crawley, West Sussex RH10 2RZ (GB)
(72) Inventor: Blanks, Steven John, Winsford, Cheshire CW7 2TU (GB)
(74) Representative: Evans, Huw David Duncan

(56) References cited:
- WO-A-82/02035
- US-A- 2 632 217
- US-A- 2 692 413
- US-A- 5 291 637

## Description

This invention relates to a tie for forming into a loop around cables and other objects, and more particularly to a tie formed from metal.

Ties for forming into loops around cables etc. are well known. One such tie comprises an elongate strap extending from an apertured head. In use, the tie can be formed into a loop by passing the free end of the strap through the apertured head. A flexible pawl inside the head engages serrations on the strap and prevents the strap from loosening.

An advantage of such ties is that they can conveniently be formed as a one piece plastics moulding. However, a disadvantage of plastics ties is that they break relatively easily under load, particularly once the plastic has become brittle. Another disadvantage of plastics ties is that they are unsuitable for use in some environments, say where extremes of temperature exist.

Ties formed from metal are also well-known. Such ties are generally stronger and are more suitable for use in some environments. A disadvantage of metal ties is that they cannot be formed as a one-piece moulding.

WO82/02035 and US-A-5 291 637 each disclose a tie comprising an apertured head and an elongate flexible strap attached at a first end thereof to the head, and a locking member mounted in a cavity inside the head and arranged to engage the strap, when the second end of the strap is passed through the head aperture. The elongate flexible strap is attached to the head by folding the first end thereof through substantially 180° to form a U-shaped portion, which engages over a bottom wall of the head. A barb on the distal end of the U-shaped portion of the strap engages a location in the bottom wall of the head.

The ball is inserted into the head cavity through an open end wall of the head during assembly of the tie. A tab on the head is then folded over to close the open end wall and captively retain the ball inside the head cavity: This assembly operation is difficult and time consuming.

In use, the tie is formed into a loop around the cables or other objects to be tied and the free end of the strap inserted through the head aperture. The locking member engages the strap as it is pulled through the head aperture in the tightening direction. The strap is released, once it has been sufficiently tightened, thereby causing it to withdraw slightly from the head. This withdrawal movement causes the locking ball to more to a locking position in which it becomes wedged between a wall of the head and the strap, so as to securely lock the latter to the head.

We have now devised a tie of the type disclosed in W082/02035 which is less difficult and time consuming to assemble and which is characterised in that an opening is formed in the head, through which the locking member is inserted during assembly of the tie, said first end of the strap extending over the opening in the head and captively mounting the locking member in the head cavity.

The tie is assembled by inserting the locking member through the opening in the head prior to attaching the strap to the head.

Preferably the locking member comprises a rotatable ball or roller.

Preferably the locking member is movable between an unlocked position and a locked position inside the head, the opening being disposed adjacent the locked position.

Preferably the opening extends through a flat wall of the head, the strap extending over the flat wall, so as to close the opening therein.

Preferably the tie is formed from metal.

The straps of known metal ties are usually attached to the head during assembly of the tie by folding a flap on one end of the strap over a portion of the head. A barb may be provided on the flap to engage the head and prevent the flap from unfolding when the strap is under load. However, it is relatively easy for the barb to become dislodged such that the strap becomes detached from the head.

Thus, preferably the strap is a flat strap, said first end of the strap being folded through substantially 180° to form a U-shaped portion, which engages over said wall of the head, at least one arm of said U-shaped portion carrying a barb, which engages the opposite arm of said U-shaped portion through said opening in said wall.

It will be appreciated that the barb positively locks the head-engaging portion of the strap in a loop around the passage wall of the head.

Preferably each arm of the head-engaging portion of the strap comprises a barb which engages with the barb on the opposite arm.

Preferably the barbs are formed by stamping the strap prior to assembly of the tie.

An embodiment of this invention will now be described by way of example only and with reference to the accompanying drawings, in which:

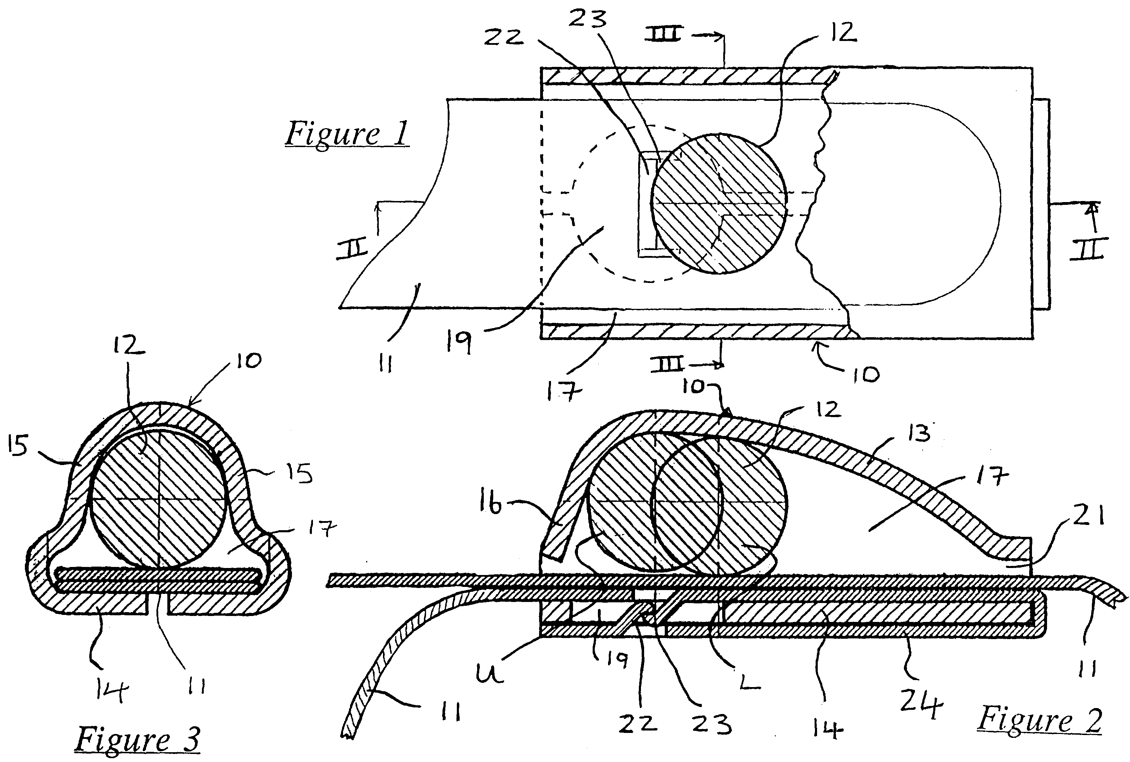

FIGURE 1 is a fragmentary plan view of a metal tie in accordance with this invention, with some parts being shown in section;
FIGURE 2 is a sectional view along the line II-II of Figure 1, when the tie is secured; and
FIGURE 3 is a sectional view along the line III-III of Figure 1, when the tie is secured.

Referring to the drawings, there is shown a three-piece tie formed from stainless steel and comprising a head 10, an elongate flexible strap 11 attached to the head, and a locking ball 12 captively mounted within the head.

The head 10 comprises an inclined top wall 13, a flat bottom wall 14, opposite side walls 15,15 and a rear end wall 16, these walls defining an elongate internal cavity 17 inside the head. The top and bottom walls 13,14 converge towards a front end of the head 10. The head is preferably formed by stamping a pre-shaped sheet of metal to form a hollow which defines the top, side and end walls 13,15,16 of the head. The bottom wall 14 of the head is subsequently formed by folding inwardly two tabs which extend from respective longitudinal lower edges of the opposite side walls 15,15.

Two semi-circular portions are cut out from the opposed side edges of the tabs so as to form an opening in the bottom wall 14, which communicates with the cavity 17 adjacent the rear of the tie.

An elongate strap-receiving passage 21 extends from front to rear through the head 10 and passes through the cavity 17.

The strap 11 comprises an elongate flat metal strip which is stamped to form two barbs 22,23 which project outwardly from one side of the strap adjacent an end thereof. The barbs 22,23 are disposed on a longitudinal line which extends along the centre of the strap 11. The barbs 22,23 are each directed towards the opposite end of the strap 11. The strap comprises a U-shaped head-engaging portion 24 which is formed by folding the strap transverse to its axis at a point intermediate the two barbs 22,23. The strap is folded through approximately 120° such that the barbs 22,23 project towards each other, but do not engage.

In order to assemble the tie, the locking ball 12 is inserted into the cavity 17 through the opening in the bottom wall 14. Next, the strap 11 is fed through the passage 21, from front to rear, until the U-shaped head-engaging portion 24 of the strap engages over the bottom wall 14 of the tie. The projecting arm of the head-engaging portion 24 of the strap is then folded a further 60° or so, so that it lies against the bottom wall 14 of the head: thus causes the two barbs 22,23 to interengage through the opening 19.

It will be appreciated that the strap 11 is positively locked in a loop around a portion of the bottom wall of the head, so that the head cannot easily become detached from the strap.

The strap 11 also closes the opening 19 in the head, so that the ball 12 is captively retained in the cavity 17.

In use, the free end of the strap is passed around a bundle of cables and other objects to be secured, before being inserted into the strap-receiving passage from the front of the head. The strap 11 passes between the ball 12 and the floor of the cavity 17. During insertion of the strap, the ball is pushed towards the rear of the cavity 17, and thus the strap can be freely pulled through the head.

The strap 11 is released once it has been fully tightened, so as to allow the strap to withdraw slightly from the head 10; thus causes the locking ball 12 to move from its unlocked position U at the rear of the cavity 17 to a locked position L towards the front of the cavity. In its locked position L the ball 12 wedges between the strap 11 and the top wall 13 of the head. The ball 12 thus engages the strap and prevents it from disengaging from the head

## Claims

1. A tie comprising an apertured head(10) and an elongate flexible strap (11) attached at a first end (24) thereof to the head (10), and a locking member (12) mounted in a cavity (17) inside the head (10) and arranged to engage the strap (11), when the second end of the strap (11) is passed through the head aperture (21), characterised in that an opening (19) is formed in the head (10), through which the locking member (12) is inserted during assembly of the tie, said first end of the strap (11) extending over the opening (19) in the head (10) and captively mounting the locking member (12) in the head cavity (17).

2. A tie as claimed in claim 1, characterised in that the locking member (12) comprises a rotatable ball.

3. A tie as claimed in claim 1, characterised in that the locking member (12) comprises a rotatable roller.

4. A tie as claimed in any preceding claim, characterised in that the locking member (12) is movable between an unlocked position (U) and a locked position (L) inside the head (10), the opening (19) being disposed adjacent the unlocked position (U).

5. A tie as claimed in any preceding claim, characterised in that the opening (19) extends through a flat wall (14) of the head (10), the strap (11) extending over the flat wall (14), so as to close the opening (19) therein.

6. A tie as claimed in any preceding claim, characterised in that the strap (11), head (10) and locking member (12) are formed from metal.

7. A tie as claimed in any preceding claim, characterised in that the strap (11) is a flat strap (11), said first end of the strap (11) being folded through substantially 180° to form a U-shaped portion (24), which engages over said wall (14) of the head (10), at least one arm of said U-shaped portion (24) carrying a barb (22,23), which engages the opposite arm of said U-shaped portion (24) through said opening (19) in said wall (14).

8. A tie as claimed in claim 7, characterised in that each arm of said U-shaped portion (24) of the strap (11) comprises a barb (22,23), which engages with the barb on the opposite arm.

9. A tie as claimed in claim 8, characterised in that the barbs (22,23) are formed by stamping the strap (11) prior to assembly of the tie.

## Patentansprüche

1. Binder, umfassend einen durchlochten Kopf (10) und ein längliches flexibles Band (11), das mit seinem ersten Ende (24) an dem Kopf (10) angebracht ist, und einem Verriegelungselement (12), das in einem Hohlraum (17) innerhalb des Kopfs (10) befestigt ist und so angeordnet ist, um das Band (11) zu erfassen, wenn das zweite Ende des Bands (11) durch das Kopfloch (21) geführt ist, dadurch gekennzeichnet, daß eine Öffnung (19) in dem Kopf (10) ausgebildet ist, durch welche das Verriegelungselement (12) während des Zusammenbaus des Binders eingeführt wird, wobei sich das erste Ende des Bands (11) über die Öffnung (19) in dem Kopf (10) erstreckt und das Verriegelungselement (12) in dem Kopfhohlraum (17) eingefangen angeordnet ist.

2. Binder nach Anspruch 1, dadurch gekennzeichnet, daß das Verriegelungselement (12) eine drehbare Kugel aufweist.

3. Binder nach Anspruch 1, dadurch gekennzeichnet, daß das Verriegelungselement (12) eine drehbare Rolle aufweist.

4. Binder nach einem der vorhergehenden Ansprüche, dadurch gekennzeichnet, daß das Verriegelungselement (12) zwischen einer unverriegelten Position (U) und einer verriegelten Position (L) innerhalb des Kopfes (10) beweglich ist, wobei die Öffnung (19) der unverriegelten Position (U) benachbart angeordnet ist.

5. Binder nach einem der vorhergehenden Ansprüche, dadurch gekennzeichnet, daß die Öffnung (19) sich durch eine flache Wand (14) des Kopfs (10) erstreckt, wobei sich das Band (11) über die flache Wand (14) erstreckt, um so die Öffnung (19) darin zu schließen.

6. Binder nach einem der vorhergehenden Ansprüche, dadurch gekennzeichnet, daß das Band (11), der Kopf (10) und das Verriegelungselement (12) aus Metall bestehen.

7. Binder nach einem der vorhergehenden Ansprüche, dadurch gekennzeichnet, daß das Band (11) ein flaches Band (11) ist, wobei das erste Ende des Bands (11) um im wesentlichen 180° umgebogen ist, um einen U-förmigen Abschnitt (24) zu bilden, der über die Wand (14) des Kopfs (10) faßt, wobei mindestens ein Arm des U-förmigen Abschnitts (24) einen Haken (22, 23) trägt, der den gegenüberliegenden Arm des U-förmigen Abschnitts (24) durch die Öffnung (19) in der Wand (14) erfaßt.

8. Binder nach Anspruch 7, dadurch gekennzeichnet, daß jeder Arm des U-förmigen Abschnitts (24) des Bands (11) einen Haken (22, 23) aufweist, der den Haken auf dem gegenüberliegenden Arm erfaßt.

9. Binder nach Anspruch 8, dadurch gekennzeichnet, daß die Haken (22, 23) gebildet sind durch Stempelpressen des Bands (11) vor dem Zusammenbau des Binders.

## Revendications

1. Une attache comprenant une tête (10) à ouverture et une bande (11) flexible allongée fixée à une première extrémité (24) à la tête (10), ainsi qu'un organe de verrouillage (12) monté dans une cavité (17) à l'intérieur de la tête (10) et agencé pour venir en prise avec la bande (11) lorsque la seconde extrémité de la bande (11) est passée à travers l'ouverture (21) de la tête,
caractérisée en ce qu'une ouverture (19) est formée dans la
tête (10), à travers laquelle l'organe de verrouillage (12) est inséré durant l'assemblage de l'attache, ladite première extrémité de la bande (11) s'étendant au-dessus de l'ouverture (19) dans la tête (10) et montant de manière captive l'organe de verrouillage (12) dans la cavité (17) de la tête.

2. Une attache telle que revendiquée à la revendication 1,
caractérisée en ce que l'organe de verrouillage (12)
comprend une bille rotative.

3. Une attache telle que revendiquée à la revendication 1,
caractérisée en ce que l'organe de verrouillage (12)
comprend un rouleau rotatif.

4. Une attache telle que revendiquée à une quelconque revendication précédente,
caractérisée en ce que l'organe de verrouillage (12) est
mobile entre une position déverrouillée (U) et une position verrouillée (L) à l'intérieur de la tête (10), l'ouverture (19) étant disposée adjacente à la position déverrouillée (U).

5. Une attache telle que revendiquée à une quelconque revendication précédente,
caractérisée en ce que l'ouverture (19) s'étend à travers
une paroi plane (14) de la tête (10), la bande (11) s'étendant au-dessus de la paroi plane (14) de manière à fermer l'ouverture (19) formée dedans.

6. Une attache telle que revendiquée à une quelconque revendication précédente,
caractérisée en ce que la bande (11), la tête (10) et
l'organe de verrouillage (12) sont formés de métal.

7. Une attache telle que revendiquée à une quelconque revendication précédente,
caractérisée en ce que la bande (11) est une bande (11)
plate, ladite première extrémité de la bande (11) étant pliée de sensiblement 180° pour former une portion (24) en forme de U qui vient en prise au-dessus de ladite paroi (14) de la tête (10), au moins une branche de ladite position (24) en forme de U portant un picot (22, 23) qui est en prise avec la branche opposée de ladite portion (24) en forme de U à travers ladite ouverture (19) dans ladite paroi (14).

8. Une attache telle que revendiquée à la revendication 7,
caractérisée en ce que chaque branche de ladite portion
(24) en forme de U de la bande (11) comprend un picot (22, 23) qui vient en prise avec le picot sur la branche opposée.

9. Une attache telle que revendiquée à la revendication 8,
caractérisée en ce que les picots (22, 23) sont formés par
poinçonnage de la bande (11) avant l'assemblage de l'attache.
